# FASCICULE DE BREVET EUROPEEN

(11) **EP 3 763 319 B1**
(45) Date de publication et mention de la délivrance du brevet: **08.05.2024**
(21) Numéro de dépôt: 20183806.7
(22) Date de dépôt: 02.07.2020
(51) Int. Cl.: A61C 7/00, G06T 19/20

(54) **PROCEDE D'EVALUATION D'UNE SITUATION DENTAIRE A L'AIDE D'UN MODELE D'ARCADE DENTAIRE DEFORME**
VERFAHREN ZU EINSCHÄTZUNG EINER ZAHNSITUATION MITHILFE EINES VERFORMTEN ZAHNBOGENMODELLS
METHOD FOR ASSESSING A DENTAL SITUATION WITH THE HELP OF A DEFORMED DENTAL ARCH MODEL

(30) Priorité: 08.07.2019 FR 1907631
(43) Date de publication de la demande: 13.01.2021
(73) Titulaire: Dental Monitoring, 75017 Paris (FR)
(72) Inventeur: SALAH, Philippe, 75017 PARIS (FR); PELLISSARD, Thomas, 75004 PARIS (FR); DEBRAUX, Laurent, 75020 PARIS (FR); ROISIN, Louis-Charles, 75016 PARIS (FR)
(74) Mandataire: Cabinet Nony

(56) Documents cités:
- CN-A- 107 260 351
- US-A1- 2016 175 068
- US-A1- 2019 029 784

## Description

### Domaine technique

La présente invention concerne un procédé d'évaluation d'une situation dentaire, notamment pour évaluer le surplomb dentaire.

### Technique antérieure

Le surplomb dentaire horizontal, c'est-à-dire antéro - postérieur (ou « overjet ») se mesure par la distance, en millimètres et dans le plan occlusal, entre les incisives centrales maxillaires et les incisives centrales mandibulaires. Lorsque cette distance est excessive, et classiquement lorsque les incisives supérieures d'un patient sont anormalement en avant, il peut être nécessaire, pour des raisons thérapeutiques ou esthétiques, de corriger cette situation.

L'évaluation du surplomb dentaire horizontal, par l'orthodontiste, détermine le traitement orthodontique et son efficacité.

Il existe un besoin permanent pour améliorer cette évaluation.

Un but de la présente invention et de répondre à ce besoin.

### Résumé de l'invention

Selon l'invention, on atteint ce but au moyen d'un procédé d'évaluation d'une situation dentaire d'un patient, comportant les étapes successives suivantes , mises en oeuvre au moyen d'un ordinateur :
1) génération d'un modèle d'au moins une arcade dentaire du patient, dit « modèle initial », de préférence au moyen d'un scanner ;
2) découpage du modèle initial afin de définir des modèles élémentaires pour chacune d'au moins une partie des dents, de préférence pour chaque dent représentée dans le modèle initial, ou « modèles de dent », de manière à obtenir un modèle découpé ;
3) définition, de préférence par ordinateur, d'une courbe de support dans le modèle découpé, de préférence d'une courbe d'alignement des modèles de dent, ou « courbe de support initiale » ;
4) fixation virtuelle d'au moins une partie, de préférence de chaque modèle de dent à la courbe de support initiale, de manière que la position et l'orientation dudit modèle de dent se modifient à mesure que la courbe de support initiale est déformée ;
5) modification du modèle découpé par déformation de la courbe de support initiale jusqu'à obtenir une courbe de support déformée, de préférence rectiligne, de manière à obtenir un premier modèle déformé,
6) prise, sur le premier modèle déformé, d'une ou plusieurs mesures de dimension.

Comme on le verra plus en détail dans la suite de la description, un procédé selon invention permet de générer un modèle modifié pour faciliter l'analyse et/ou la prise de mesures. Avantageusement, ce modèle modifié peut être conçu pour permettre la visualisation simultanée d'un grand nombre de dents, et en particulier d'un nombre de dents supérieur à celui que permet une vue du modèle initial ou une photo de l'arcade. La rapidité et la précision de l'analyse en sont améliorées.

Un procédé selon invention peut encore comporter une ou plusieurs des caractéristiques optionnelles suivantes :
- le procédé comporte une étape 6), postérieure à l'étape 5), dans laquelle
   - le premier modèle déformé est présenté à un opérateur, de préférence à un professionnel des soins dentaires, de préférence sur un écran d'ordinateur, et/ou
   - on modifie la forme et/ou la position d'un ou plusieurs modèles de dent du premier modèle déformé ;
- à l'étape 2), on découpe le modèle initial de manière à définir un modèle d'arcade supérieure et un modèle d'arcade inférieure, et, à l'étape 6), on modifie la position du modèle d'arcade supérieure par rapport au modèle d'arcade inférieure ;
- le procédé comporte une étape 7), postérieure à l'étape 5) ou à l'étape 6), dans laquelle
   A) on modifie le premier modèle déformé par déformation de la courbe de support déformée jusqu'à obtenir une courbe de support finale, de préférence identique à la courbe de support initiale, de manière à obtenir un deuxième modèle déformé ; puis
   B) de préférence, à partir du deuxième modèle déformé, on détermine un traitement orthodontique et/ou on conçoit et de préférence on fabrique un appareil orthodontique, de préférence une gouttière orthodontique ;
- à l'étape 5), la courbe de support initiale, en totalité ou en partie,
   - est indéformable selon une ou plusieurs directions, de préférence conserve sa longueur, et/ou
   - présente une capacité d'allongement ou de raccourcissement uniforme et/ou limitée lors de ladite déformation ;
- les modèles de dents sont configurés pour laisser libre la déformation à l'étape 5) et/ou à l'étape 7), c'est-à-dire ne pas s'opposer à ladite déformation ;
- les modèles de dents sont configurés pour s'interpénétrer ou se déformer lorsque, lors la déformation de la courbe de support initiale, ils entrent en contact avec un modèle de dent adjacent, de manière à ne pas s'opposer à la déformation à l'étape 5) et/ou à l'étape 7) ;
- avant l'étape 5), on colore, au moins partiellement, le modèle initial en utilisant un scanner couleur à l'étape 1) ou par un procédé de coloration comportant les étapes successives suivantes :
   a) identification d'une vue du modèle initial présentant une concordance maximale avec une photo de l'arcade ;
   b) identification pour un voxel, de préférence pour chaque voxel, représenté sur ladite vue, d'un pixel de ladite photo qui représente le même point de l'arcade dentaire que le voxel ;
   c) affectation au dit voxel des couleurs dudit pixel ;
- la photo est remplacée par une vue hyperréaliste obtenue au moyen d'un réseau de neurones, de préférence suivant les étapes successives suivantes :
   a') création d'une base d'apprentissage constituée de plus de 1 000 enregistrements, chaque enregistrement comportant :
      - une photo représentant une arcade dentaire « historique », et
      - une vue « historique » d'un modèle tridimensionnel numérique modélisant ladite arcade dentaire historique, la vue « historique » représentant l'arcade dentaire historique comme la photo, c'est-à-dire de manière à être superposable en registre avec la photo ;
   b') entraînement d'un réseau de neurones au moyen de la base d'apprentissage afin qu'il apprenne à colorer, de manière hyperréaliste, une vue d'un modèle ;
   c') soumission de ladite vue du modèle initial au réseau de neurones entrainé, de manière qu'il colore ladite vue de manière hyperréaliste ;
- la courbe de support déformée est rectiligne ;
- à l'étape 3), la courbe de support initiale est déterminée au moyen d'un algorithme de calcul, de préférence en fonction de caractéristiques dimensionnelles de l'arcade ;
- à l'étape 3), la courbe de support initiale est déterminée de manière à traverser au moins deux modèles de dent, de préférence tous les modèles de dent de l'arcade dentaire ;
- à l'étape 3), on détermine plusieurs courbes de support initiales, à l'étape 4), on fixe virtuellement lesdites courbes de support initiales aux mêmes modèles de dent, à des modèles de dent différents, ou partiellement aux mêmes modèles de dent et partiellement à des modèles de dent différents, et à l'étape 5), on déforme les courbes de support initiales sans modifier leurs longueurs respectives.

L'invention concerne également l'utilisation d'un procédé selon l'invention pour concevoir un appareil orthodontique.

On décrit également :
- un programme d'ordinateur comprenant des instructions de code de programme pour l'exécution du procédé selon l'invention, lorsque ledit programme est exécuté par un ordinateur,
- un support informatique sur lequel est enregistré un tel programme, par exemple une mémoire ou un CD-ROM.

### Définitions

Un « patient » est une personne pour laquelle un procédé selon l'invention est mis en oeuvre, indépendamment du fait que cette personne suive un traitement orthodontique ou non.

Un « professionnel de soins dentaires » peut-être en particulier un orthodontiste ou un dentiste.

Une « situation dentaire » définit un ensemble de caractéristiques relatives à une arcade dentaire d'un patient à un instant, par exemple la position des dents, leur forme, la position d'un appareil orthodontique, etc. à cet instant.

Par « modèle », on entend une représentation tridimensionnelle numérique. Un modèle est constitué d'un ensemble de voxels. Un « modèle d'une arcade » est un modèle représentant au moins une partie d'une arcade dentaire, de préférence au moins 2, de préférence au moins 3, de préférence au moins 4 dents, de préférence toutes les dents d'une arcade. Un « modèle de dent » est un modèle représentant une unique dent.

Le « découpage » d'un modèle d'une arcade en « modèles de dent » est une opération permettant de délimiter et à rendre autonomes les représentations des dents (modèles de dent) dans le modèle de l'arcade. Un modèle de dent est « autonome » lorsqu'il n'est pas solidaire du reste du modèle de l'arcade, de sorte qu'il peut être orienté, par exemple tourné, indépendamment du reste du modèle d'arcade.

Une « courbe de support » est une courbe par rapport à laquelle des modèles de dent sont immobilisés. De préférence, la courbe de support suit l'alignement des modèles de dent et peut être qualifiée de « courbe d'alignement ». De préférence, elle traverse les modèles de dent.

Une observation d'un modèle, dans des conditions d'observation déterminées, en particulier selon une direction d'observation et à une distance déterminées, est appelée une « vue ». Une vue « de face » d'un modèle d'une arcade dentaire est une vue suivant une direction d'observation perpendiculaire au plan général des faces vestibulaires des incisives modélisées. Les autres vues (vue de dessus, vue de dessous, vue de droite et vue de gauche) sont définies par rapport à cette vue de face.

Les adjectifs « supérieur », « inférieur », horizontal » et « vertical » font référence à une position dans laquelle le plan d'occlusion est horizontal, l'arcade supérieure du patient étant au-dessus de son arcade inférieure.

Par « vue d'une arcade », « représentation d'une arcade », « scan d'une arcade », ou « modèle d'une arcade », on entend une vue, une représentation, un scan ou un modèle de tout ou partie de ladite arcade dentaire.

Un « réseau de neurones » ou « réseau neuronal artificiel » est un ensemble d'algorithmes d'intelligence artificielle bien connu de l'homme de l'art.

Une représentation, en particulier une vue d'un modèle, est « hyperréaliste » lorsqu'elle semble être une photo.

Il faut interpréter "comprenant " ou "comportant " ou "présentant " de manière non restrictive, sauf indication contraire.

Une opération est réalisée « par ordinateur » lorsqu'elle est effectuée, dans sa totalité, par cet ordinateur. Si un opérateur est nécessaire pour guider l'ordinateur dans son travail, cette opération est effectuée « au moyen d'un ordinateur » ou « avec un ordinateur ». Les étapes 1) à 7) sont réalisées au moyen d'un ordinateur. Une ou plusieurs des étapes 2) à 7) peuvent être réalisées par ordinateur.

### Brève description des figures

D'autres caractéristiques et avantages de l'invention apparaîtront encore à la lecture de la description détaillée qui va suivre et à l'examen du dessin annexé dans lequel :
- [Fig 1] la figure 1 représente, schématiquement, les différentes étapes d'un procédé selon l'invention ;
- [Fig 2] la figure 2 représente un exemple d'une vue en perspective d'un modèle d'une arcade dentaire ;
- [Fig 3] la figure 3 représente un exemple d'une vue de face d'un modèle d'une arcade dentaire sur lequel un modèle de dent a été délimité ;
- [Fig 4] la figure 4 représente un exemple d'une vue de dessus d'un modèle d'une arcade dentaire dans lequel les modèles de dent ont été différentiés par nuance de gris et une courbe de support initiale a été représentée ;
- [Fig 5] la figure 5 représente un ordinateur présentant, en partie supérieure, une vue de face d'un modèle de mâchoire dont les deux modèles d'arcade sont déformés, seuls les modèles de dent étant représentés, et, en partie inférieure, une vue de face d'un modèle de mâchoire dont les deux modèles d'arcade sont déformés ;
- [Fig 6] la figure 6 représente une vue en perspective d'un modèle de mâchoire dont les deux modèles d'arcade initiaux sont découpés, seuls les modèles de dent étant représentés ;
- [Fig 7] la figure 7 représente le modèle de mâchoire de la figure 6 en cours de déformation ;
- [Fig 8] la figure 8 représente le modèle de mâchoire de la figure 6 en fin de déformation, vu de face ; et
- [Fig 9] la figure 9 illustre les étapes mises en oeuvre dans une application dans laquelle un modèle initial d'une arcade (A) est déroulée (B)(C), une dent est déplacée sur le modèle déroulé (D), puis le modèle ainsi modifié est redressé (E)(F).

### Description détaillée

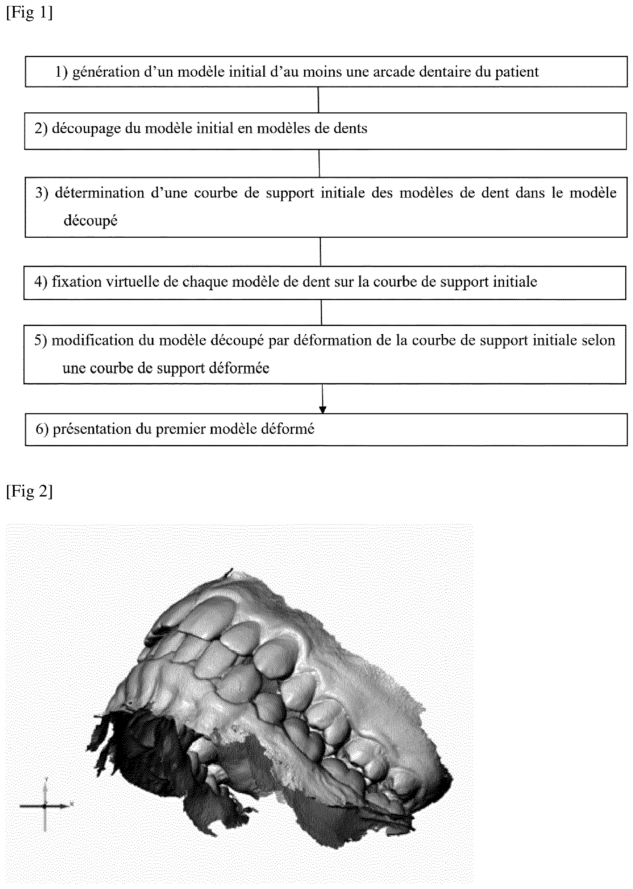

Comme représenté sur la figure 1, un procédé selon l'invention comporte des étapes 1) à 7).

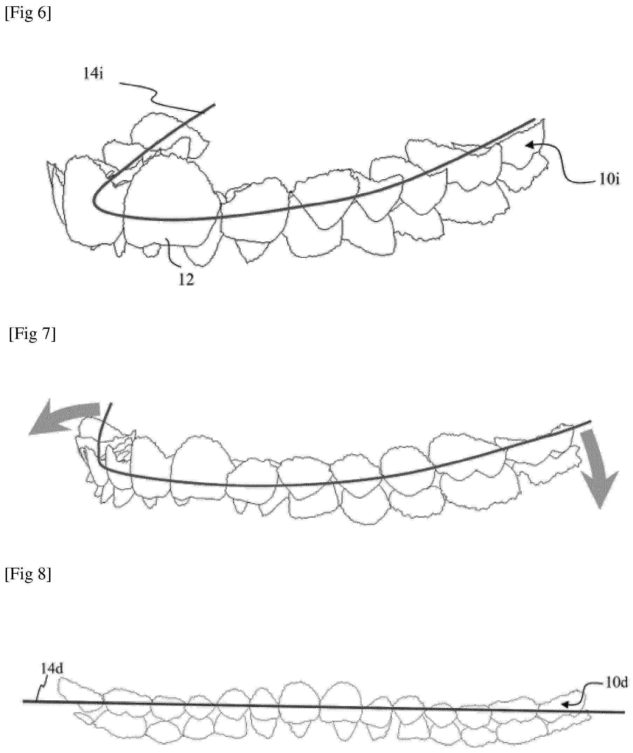

**A l'étape 1),** un modèle initial 10 d'au moins une arcade d'un patient, de préférence des deux arcades du patient (le modèle initial constituant alors un modèle de mâchoire), est préparé, de préférence à partir de mesures effectuées sur les dents du patient ou sur un moulage de ses dents, par exemple un moulage en plâtre (figures 2 et 6). Le modèle initial est de préférence créé avec un scanner 3D, de préférence utilisé pour scanner directement les dents du patient.

Dans un autre mode de réalisation, le modèle initial est théorique, c'est-à-dire ne correspond pas exactement à une situation réelle. En particulier, le modèle initial peut être créé par assemblage informatique d'un ensemble de modèles de dents de base choisis dans une bibliothèque numérique.

Le modèle initial peut être également obtenu par déformation d'un modèle d'origine. Le modèle d'origine peut être en particulier déformé pour correspondre à des photos de l'arcade du patient, c'est-à-dire être modifié par « photo monitoring ». La déformation peut être par exemple déterminée pour adapter le modèle d'origine pour qu'il soit en cohérence avec des photos des arcades du patient prises, par exemple avec un téléphone portable, par exemple au cours d'un traitement orthodontique. De préférence, la déformation comporte un déplacement de modèles de dent du modèle d'origine, sans déformation desdits modèles de dent.

Le modèle d'origine peut être théorique ou, de préférence, être un scan de l'arcade, par exemple effectué au début d'un traitement orthodontique.

De préférence, le modèle initial représente plus de 50 %, de préférence plus de 80 %, de préférence 100 % des dents d'une arcade, de préférence des dents des deux arcades.

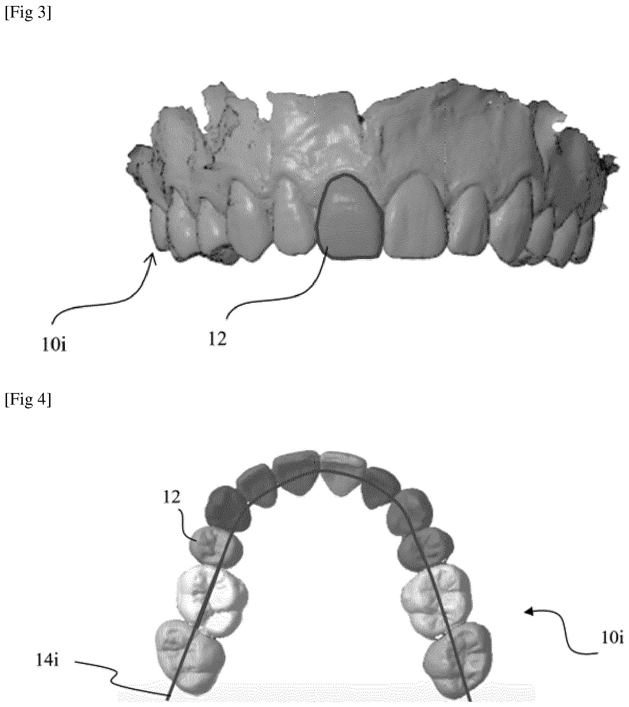

**A l'étape 2),** le modèle initial 10 est découpé en modèles de dent 12 modélisant chacun une dent respective (figure 3). Le découpage d'un modèle peut être classiquement réalisé manuellement avec un ordinateur. Il peut être également réalisé par ordinateur, c'est-à-dire automatisé, par exemple par analyse d'images, de préférence en utilisant un réseau de neurones.

L'étape 2) peut être réalisée par tout procédé de découpage conventionnel.

De préférence, à l'étape 2), le modèle initial est découpé en deux modèles d'arcade modélisant chacun une arcade du patient respective. Suite à ce découpage, le professionnel de soins dentaires peut avantageusement modifier les positions relatives des deux modèles d'arcade, par exemple pour éviter le chevauchement entre des modèles de dent du modèle de l'arcade supérieure avec des modèles de dent de l'arcade inférieure. Il évite ainsi que certains modèles de dent ne masquent d'autres modèles de dent.

Dans un mode de réalisation, le déplacement d'une arcade par rapport à l'autre est guidé, par exemple pour être limité à un déplacement vertical.

En observant les modèles des arcades supérieure et inférieure vues de dessus, un opérateur peut immédiatement évaluer le surplomb éventuel.

**A l'étape 3**), on définit au moins une courbe de support, ou « courbe de support initiale » 14i (figures 4 et 6). Cette courbe peut être déterminée manuellement ou automatiquement. Elle peut être représentée sur le modèle initial ou non.

La courbe de support initiale 14i est une courbe par rapport à laquelle, à l'étape suivante, les modèles de dent vont être immobilisés. De préférence, elle s'étend le long de l'arcade, en suivant sensiblement les dents qui se succèdent sur cette arcade.

Elle peut être théorique, et par exemple correspondre à la forme générale d'une arcade. Elle peut notamment être choisie dans une base de données contenant des courbes de support typiques, représentant des formes générales de différents types d'arcade.

Elle peut être également créée à la main sur une vue du modèle initial, par exemple par un opérateur, éventuellement par déformation d'une courbe de support typique.

De préférence, la courbe de support initiale est déterminée au moyen d'un algorithme de calcul, de préférence en fonction de caractéristiques dimensionnelles de l'arcade. Des algorithmes à cet effet sont connus, notamment pour la réalisation de clichés panoramiques par tomographie.

De préférence, la courbe de support initiale s'étend dans un plan, de préférence dans le plan médian de l'arcade.

De préférence encore, la courbe de support initiale présente la forme d'un U ou d'un fer à cheval.

Dans un mode de réalisation, la courbe de support initiale passe par les barycentres des modèles de dent ou est la projection, dans un plan horizontal, de préférence dans le plan d'occlusion, d'une courbe passant par les barycentres des modèles de dent. La courbe de support initiale peut être également une ligne passant par les points des modèles de dents adjacents qui sont les plus proches, c'est-à-dire passant par les points de contact entre les modèles de dents adjacents lorsqu'ils se touchent. La courbe de support initiale peut être encore la projection, dans un plan horizontal, de préférence dans le plan d'occlusion, d'une telle ligne.

La courbe de support initiale a des propriétés de déformation qui, de préférence, peuvent être déterminées à l'étape 3). En particulier, localement ou sur toute sa longueur, elle peut
- être de longueur constante, c'est-à-dire qui ne varie pas lorsqu'elle est déformée, à l'étape 5) , et/ou
- avoir une capacité d'allongement limitée, et/ou
- être indéformable selon une ou plusieurs directions.

Dans un mode de réalisation, chaque portion de la courbe de support initiale qui s'étend entre deux modèles de dent adjacents est de longueur constante.

Dans un mode de réalisation, en particulier lorsque la longueur de la courbe de support initiale est constante, les modèles de dents peuvent s'interpénétrer ou s'écraser lorsqu'ils entrent en contact lors la déformation de la courbe de support initiale, à l'étape 5). Avantageusement, ils n'entravent donc pas cette déformation. L'opérateur peut donc déformer le modèle découpé jusqu'à obtenir une vue lui permettant d'analyser de manière optimale les écarts entre les dents suivant la courbe de support initiale.

Dans un mode de réalisation, les modèles de dents ne peuvent s'interpénétrer lors la déformation de la courbe de support initiale, à l'étape 5). Avantageusement, l'opérateur peut donc déformer le modèle découpé en tenant compte du comportement réel des dents. La courbe de support initiale peut être de longueur variable, en particulier dans ce mode de réalisation.

Dans un mode de réalisation, plusieurs courbes de support initiales peuvent être déterminées à l'étape 3). À l'étape 4), elles peuvent être virtuellement fixées aux mêmes modèles de dent, à des modèles de dent différents, ou partiellement fixées aux mêmes modèles de dent et partiellement à des modèles de dent différents.

Les différentes courbes de support initiales peuvent être de même longueur ou de longueurs différentes.

**A l'étape 4),** au moins une partie des modèles de dent, de préférence tous les modèles de dent sont fixés virtuellement sur la courbe de support initiale. Cette fixation « virtuelle » signifie que, dans le modèle initial, les modèles de dent et la courbe de support initiale sont assemblés informatiquement de manière à former un ensemble monobloc. Autrement dit, un déplacement d'un modèle de dent entraîne celui de la courbe de support initiale, et réciproquement. En particulier, un modèle de dent fixé sur la courbe de support initiale par un point de fixation ne peut pas tourner autour de ce point. La fixation virtuelle n'impose pas à la courbe de support initiale de traverser, ni même d'être en contact avec les modèles de dent qui y sont fixés.

**A l'étape 5),** la courbe de support initiale est déformée (figure 7) jusqu'à obtenir un premier modèle déformé 10d (figure 8).

De préférence, cette déformation est réalisée à longueur constante. Autrement dit, la déformation de la courbe de support initiale ne modifie pas sa longueur. Lorsqu'un tronçon de la courbe de support initiale sépare deux modèles de dent, la longueur de ce tronçon n'est donc pas modifiée lors de la déformation. Si cette longueur est représentative, par exemple, d'un diastème sur le modèle initial, elle peut donc être également mesurée sur le premier modèle déformé.

La déformation de la courbe de support initiale peut consister en une modification de son ouverture (ouverture du U ou du fer à cheval), ce qui permet par exemple de simuler une modification de la flèche d'arcade.

La déformation de la courbe de support initiale peut également consister en un « déroulement » de cette courbe, c'est-à-dire à un accroissement, au moins local, de son rayon de courbure. Ce déroulement peut être en particulier effectué jusqu'à rendre rectiligne la courbe de support initiale (figure 8).

On appelle « courbe de support déformée » 14d la courbe de support initiale après qu'elle a été déformée.

Les modèles de dent étant fixés virtuellement à la courbe de support initiale, leur position et/ou leur orientation se modifient à mesure que la courbe de support initiale est déformée.

Les déplacements des modèles de dent ne modifient cependant pas les modèles de dent eux-mêmes. Les modèles de dent dans le premier modèle déformé résultant de la déformation de la courbe de support initiale sont donc les mêmes que dans le modèle initial.

Lorsque la courbe de support initiale, s'étendant initialement dans un plan, est déformée de manière à être rendue rectiligne, on obtient ainsi un premier modèle déformé qui, lorsqu'il est observé de face, fournit une vue similaire à celle d'un cliché panoramique obtenu par tomographie. Cependant, un tel cliché panoramique ne représente pas avec précision les dents. Le traitement des images prises pendant la réalisation du cliché panoramique conduit en effet à une représentation des dents qui ne correspond pas exactement aux dents. Au contraire, le premier modèle déformé représente les modèles de dent avec exactement les mêmes dimensions que celles des modèles de dent du modèle initial. Si le modèle initial est une représentation fidèle d'une arcade dentaire du patient, le premier modèle déformé représente ainsi une arcade dentaire « déroulée » sans déformation des dents.

Par ailleurs, le premier modèle déformé présente l'avantage de pouvoir être observé selon une direction d'observation quelconque.

L'ajout de plusieurs courbes de support initiales à l'étape 3) permet avantageusement de contraindre la déformation à l'étape 5), en particulier si les courbes de support initiales conservent leurs longueurs lors de cette déformation.

Si les courbes de support initiales traversent les modèles de dent et si la déformation des courbes de support initiales est réalisée à longueur constante de ces courbes, l'écartement entre les points de contact de chaque courbe avec les modèles de dent adjacents est maintenu constant. Ainsi, deux courbes de support initiales identiques, de longueurs constantes et fixées sensiblement l'une au-dessus de l'autre, aux mêmes modèles de dent, limitent par exemple les déformations du modèle initial à des déformations dans un plan horizontal.

La longueur d'une courbe de support initiale peut être variable lors de la déformation de l'étape 5). Par exemple, la déformation peut être réalisée par une homothétie dont le centre est par exemple le barycentre de la courbe de support initiale.

La courbe de support initiale peut être également allongée de manière uniforme, ce qui avantageusement facilite les mesures des distances entres des modèles de dent adjacents.

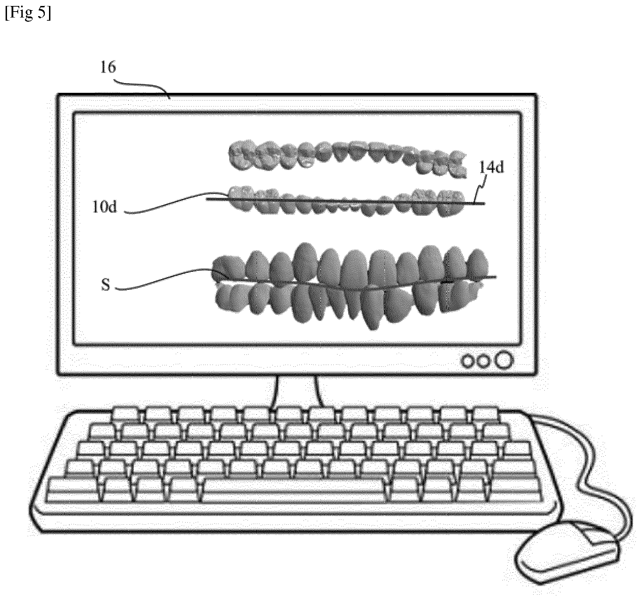

**À l'étape 6),** le premier modèle déformé est présenté un professionnel de soins dentaires, classiquement à un orthodontiste ou à un dentiste. Tous les moyens de présentation peuvent être utilisés. Classiquement, une vue du premier modèle déformé 10d est affichée sur un écran d'ordinateur 16 (figure 5). De préférence, le professionnel de soins dentaires dispose d'un logiciel lui permettant de modifier la vue affichée, en particulier la direction d'observation du premier modèle déformé ou l'échelle de la vue affichée.

La modification de la direction d'observation permet par exemple d'observer les faces linguales des dents, c'est-à-dire de disposer d'un point de vue depuis l'intérieur de la bouche.

La modification de l'échelle, c'est-à-dire du grossissement, permet par exemple d'observer en détail une région particulière de la bouche.

L'observation et les mesures prises sur le premier modèle déformé permettent avantageusement au professionnel de soins dentaires d'évaluer plus facilement et avec une meilleure précision la situation dentaire du patient.

Par exemple, lorsque la courbe de support initiale a été rendue rectiligne, le professionnel de soins dentaires peut observer le premier modèle déformé vu de face, et immédiatement apprécier la courbe de Spee S de l'arcade dentaire (figure 5) ou l'écartement latéral entre les dents adjacentes (diastème). Le professionnel de soins dentaires peut également observer le premier modèle déformé 10d vu de dessus, et comparer l'alignement des dents par rapport à la courbe de support déformée 14d (figure 5), représentée par une droite. Il peut ainsi très facilement apprécier indirectement la position des dents par rapport à la courbe de support initiale.

De manière plus générale, une vue de dessus permet au professionnel de soins dentaires d'évaluer l'écartement entre les dents adjacentes, et en particulier d'évaluer si cet écartement est variable suivant une direction perpendiculaire à la courbe de support déformée.

De préférence, le professionnel de soins dentaires prend des mesures sur le premier modèle déformé. Les mesures, de préférence prises au moyen de l'ordinateur, permettent également au professionnel de soins dentaires de mesurer objectivement la situation dentaire.

Les mesures peuvent en particulier porter sur des indicateurs dimensionnels conventionnels, et en particulier sur la distance inter-canine et/ou la largeur inter-prémolaire et/ou la largeur inter-molaire et/ou la longueur (ou « flèche ») d'arcade et/ou le périmètre d'arcade.

Dans un mode de réalisation, le professionnel de soins dentaires peut également, au moyen d'un ordinateur, modifier la position et/ou l'orientation d'un ou plusieurs modèles de dent, par exemple pour simuler une situation dentaire future. Une telle modification est notamment utile pour déterminer un positionnement des dents souhaitées à une étape d'un traitement orthodontique.

**À l'étape 7),** optionnelle, le modèle issu de l'étape 6) peut être à nouveau déformé, notamment pour réaligner les dents selon la courbe de support initiale, pour obtenir un deuxième modèle déformé.

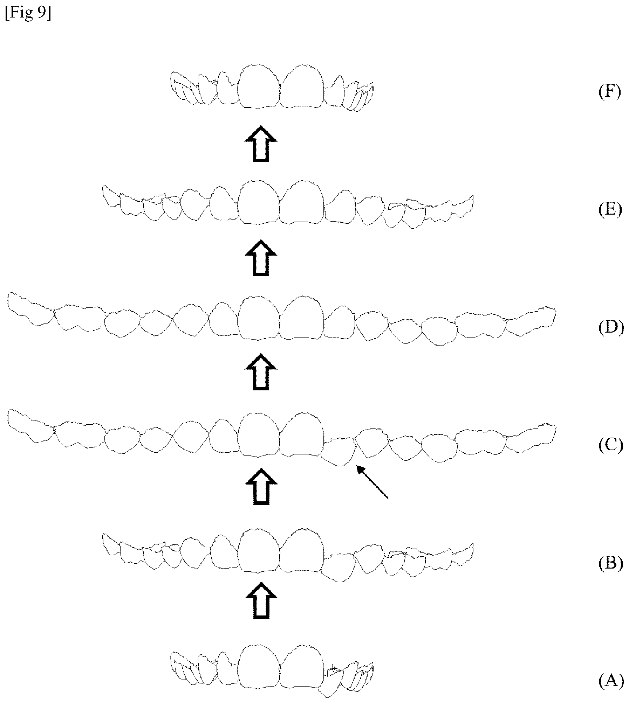

Le procédé peut être ainsi utilisé pour faciliter la modification du modèle initial, en présentant au professionnel de soins dentaires un premier modèle déformé par modification de l'alignement général des dents, puis, après qu'il a modifié la position et/ou l'orientation d'un ou plusieurs modèles de dent, en lui donnant la possibilité de modifier à nouveau l'alignement général des dents pour revenir à la courbe de support initiale. La figure 9 illustre cette application. Avantageusement, la présentation du premier modèle déformé permet ainsi non seulement une évaluation plus précise et plus rapide de la situation dentaire, mais aussi facilite la modification du modèle initial.

Le deuxième modèle déformé peut être utilisé pour planifier un traitement orthodontique et/ou concevoir, voire fabriquer un appareil orthodontique. En particulier, si, dans le deuxième modèle déformé, les modèles de dent sont alignés selon la courbe de support initiale, une comparaison du modèle initial et du deuxième modèle déformé permet de visualiser les modifications apportées à l'étape 7).

Dans un mode de réalisation dans lequel, à l'étape 6), le premier modèle déformé a été modifié pour correspondre à une situation dentaire cible dans laquelle les modèles sont positionnés et orientés suivant un agencement souhaité à une étape d'un traitement dentaire, en particulier en fin de traitement, le deuxième modèle déformé peut être utilisé pour planifier le traitement et, en particulier à différentes étapes du traitement entre l'instant auquel le modèle initial a été créé et l'instant du traitement qui correspond au deuxième modèle déformé.

Dans un mode de réalisation, on simule le modèle initial à ces différentes étapes de traitement et on présente une animation, de préférence sur un écran d'ordinateur, afin de visualiser dynamiquement l'évolution de la situation dentaire du patient.

### Exemples d'applications

Un procédé selon l'invention peut être utilisé pour relever des symptômes dimensionnels, c'est-à-dire des symptômes qui sont détectables par analyse de dimensions de l'arcade, et en particulier de distances entre différentes dents. Un procédé selon l'invention est notamment particulièrement utile pour évaluer une situation de diastème ou une situation de malocclusion, et notamment de surplomb horizontal ou vertical.

Dans un mode de réalisation, le modèle initial est coloré de manière à être hyperréaliste, c'est-à-dire à présenter des couleurs naturelles.

De préférence, le modèle initial est coloré en fonction de relevés de couleur effectués sur le patient. Un procédé selon l'invention peut être ainsi utilisé pour relever des symptômes de couleur, c'est-à-dire des symptômes qui sont détectables par analyse de la couleur de la surface de l'arcade, et en particulier de la couleur des dents. À cet effet, le modèle initial doit être coloré, au moins partiellement, en fonction des couleurs réelles de l'arcade du patient.

La coloration du modèle initial peut être obtenue au moyen d'un scanner adapté à cet effet.

Dans un mode de réalisation particulièrement avantageux, la coloration du modèle initial est obtenue par héritage de couleurs relevées sur une ou plusieurs photos de l'arcade. Plus précisément, la coloration du modèle initial est réalisée, au moins partiellement, à partir d'au moins une photo de l'arcade dentaire du patient, par report des couleurs de pixels de ladite photo sur des voxels correspondant du modèle initial.

De préférence, la coloration du modèle initial comporte les étapes successives suivantes :
a) identification d'une vue du modèle initial présentant une concordance maximale avec ladite photo ;
b) identification pour un voxel, de préférence pour chaque voxel, représenté sur ladite vue, d'un pixel correspondant de ladite photo, c'est-à-dire d'un pixel qui représente le même point de l'arcade dentaire que le voxel ;
c) affectation au dit voxel des couleurs dudit pixel.

La concordance (*« match »* ou *« fit »* en anglais) entre deux représentations d'un objet est une mesure de la différence, ou « distance », entre ces deux représentations. Une concordance est maximale (*« best fit »*) lorsque cette différence est minimale.

**A l'étape a),** on recherche la vue du modèle initial qui présente une concordance maximale avec la photo, c'est-à-dire qui représente idéalement sensiblement les mêmes dents, de la même façon. Autrement dit, les représentations des dents sur la vue et sur la photo sont sensiblement superposables.

La recherche de la vue du modèle initial qui présente une concordance maximale avec la photo peut notamment résulter d'une optimisation, de préférence au moyen d'une méthode métaheuristique, de préférence par recuit simulé, et/ou de la mise en oeuvre d'un dispositif d'apprentissage profond.

**À l'étape b),** on identifie les points de la vue qui sont représentés par des pixels respectifs sur la photo. En particulier, lorsque la photo a été prise sensiblement au même instant que le modèle initial a été créé, le modèle initial représente l'arcade dentaire qui a été photographiée. La recherche de la concordance maximale conduit ainsi à une vue qui peut être parfaitement superposée avec la photo. Une telle superposition permet d'identifier les points de la vue, et donc les voxels du modèle initial, qui sont représentés sur la photo.

**À l'étape c),** on attribue à chaque voxel du modèle initial qui est représenté par un pixel sur la photo la couleur de ce pixel.

À partir d'une photo, il est ainsi possible de colorer, avec des couleurs réelles, une partie du modèle initial.

De préférence, on renouvelle les étapes a) à c) avec plus de deux, plus de 10, voire plus de 100 photos, de préférence prises sensiblement au même instant selon différentes directions d'observation de l'arcade dentaire. Il est ainsi possible de colorer complètement le modèle initial.

Avec un modèle initial coloré, un procédé selon invention permet ainsi, par exemple, de comparer les couleurs des deux molaires aux deux extrémités d'une arcade dentaire, ou de comparer la couleur d'une molaire avec la couleur d'une incisive.

Un procédé selon invention est ainsi bien adapté pour identifier une situation dentaire d'hypominéralisation molaire incisive (MIH) pour évaluer l'efficacité d'un traitement de blanchiment des dents.

Les photos peuvent être remplacées, au moins partiellement, par des vues hyperréalistes du modèle de référence initial. De telles vues hyperréalistes peuvent être notamment obtenues au moyen d'un réseau de neurones entraîné à cet effet, suivant les étapes a') à c').

**A l'étape a'),** on crée une base d'apprentissage historique qui comporte de préférence plus de 5 000, de préférence plus de 10 000, de préférence plus de 30 000, de préférence plus de 50 000, de préférence plus de 100 000 enregistrements.

Chaque enregistrement comporte une photo représentant une arcade dentaire « historique », et une vue « historique » d'un modèle tridimensionnel numérique « historique » qui modélise l'arcade dentaire historique. La vue « historique » représente l'arcade dentaire historique comme la photo. Autrement dit, la vue historique présente une concordance maximale avec la photo, de sorte qu'elle peut être sensiblement parfaitement superposée avec la photo.

**A l'étape b'),** le réseau de neurones est classiquement effectué à partir de la base d'apprentissage.

Pour être opérationnel, un réseau de neurones doit en effet être entraîné par un processus d'apprentissage appelé *« deep learning ».*

Le réseau de neurones peut être en particulier choisi parmi :
- les réseaux spécialisés dans la localisation, et détection d'objets dans une image, les Object Détection Network, par exemple:
   - R-CNN (2013)
   - SSD (Single Shot MultiBox Detector : Object Détection network), Faster R-CNN (Faster Region-based Convolutional Network method : Object Détection network)
   - Faster R-CNN (2015)
   - SSD (2015)
   - RCF (Richer Convolutional Features for Edge Detection) (2017)
- les réseaux spécialisés dans la génération d'images, par exemple :
   - Cycle-Consistent Adversarial Networks (2017)
   - Augmented CycleGAN (2018)
   - Deep Photo Style Transfer (2017)
   - FastPhotoStyle (2018)
   - pix2pix (2017)
   - Style-Based Generator Architecture for GANs (2018)
   - SRGAN (2018).

La liste ci-dessus n'est pas limitative.

En présentant les enregistrements en entrée du réseau de neurones, ce dernier apprend progressivement comment transformer une vue d'un modèle qu'on lui présente, en une vue hyperréaliste.

L'entrainement peut être également effectué en suivant les enseignements de l'article de Zhu, Jun-Yan, et al. "Unpaired image-to-image translation using cycle-consistent adversarial networks " (Open access Computer Vision Foundation).

**A l'étape c'),** on peut ainsi soumettre une vue du modèle initial au réseau de neurones entrainé, de manière qu'il la colore de manière hyperréaliste.

La vue hyperréaliste peut être alors utilisée comme une photo pour la mise en oeuvre des étapes a) à c). Bien entendu, l'étape a) est alors simplifiée puisque la vue hyperréaliste qui remplace la photo est issue de la vue du modèle initial. Les couleurs de la vue hyperréaliste fournie par le réseau de neurones sont cependant moins spécifiques au patient que celles de la vue colorée à partir de photos de l'arcade du patient.

Comme cela apparaît clairement à présent, l'invention offre un nouvel outil d'analyse d'une situation dentaire. Il facilite ainsi le diagnostic par le professionnel de soins dentaires. Cet outil facilite également la prise de mesures et/ou la conception d'un plan de traitement orthodontique et/ou de plusieurs appareils orthodontiques, notamment de gouttières orthodontiques.

Un procédé selon invention permet également avantageusement d'observer simultanément, sur le premier ou le deuxième modèle déformé, des modèles de dents qui ne seraient pas visibles sur une même photo.

Un procédé selon l'invention est en particulier très différent du procédé décrit dans US 2016/175068. US 2016/175068 décrit en effet un procédé pour déterminer le meilleur groupe de modèles d'arcades dentaires correspondant à un traitement orthodontique. US 2016/175068 propose ainsi un procédé pour déterminer le meilleur chemin pour modifier l'agencement des dents afin d'atteindre un objectif orthodontique. Un tel procédé n'est donc pas un procédé d'évaluation d'une situation dentaire d'un patient, mais un procédé de détermination d'un traitement orthodontique.

En outre, dans US 2016/175068, la courbe de l'arcade dentaire du patient est modifiée par changement de l'agencement des modèles de dents. Autrement dit, c'est une action sur les modèles de dent pour les réagencer qui provoque cette modification. Cette modification ne se fait donc pas par déformation d'une courbe de support initiale, comme selon l'invention, mais par déplacement de modèles de dent pour simuler un traitement orthodontique.

Enfin, dans US 2016/175068, les modèles de dent sont réagencés pour simuler les différentes étapes d'un traitement orthodontique. En particulier, ils sont autorisés à tourner autour de leur point de contact avec la courbe de l'arcade dentaire. Ils ne sont donc pas virtuellement fixés à la courbe de support initiale.

Bien entendu, l'invention n'est pas limitée aux modes de réalisation décrits ci-dessus et représentés, et son étendue est définie par les revendications qui suivent.

Enfin, le patient n'est pas limité à un être humain. Un procédé selon l'invention peut être utilisé pour un autre animal.

## Revendications

1. Procédé d'évaluation d'une situation dentaire d'un patient, ledit procédé comportant les étapes successives suivantes, mises en oeuvre au moyen d'un ordinateur :
1) génération d'un modèle initial (10) d'au moins une arcade dentaire du patient;
2) découpage du modèle initial afin de définir un modèle de dent (12) pour chacune d'au moins une partie des dents représentées sur le modèle initial et ainsi obtenir un modèle découpé ;
3) définition d'une courbe de support initiale (14i) dans le modèle découpé ;
4) fixation virtuelle de chaque modèle de dent à la courbe de support initiale, de manière que la position et l'orientation dudit modèle de dent se modifient à mesure que la courbe de support initiale est déformée ;
5) modification du modèle découpé par déformation de la courbe de support initiale jusqu'à obtenir une courbe de support déformée (14d), de manière à obtenir un premier modèle déformé,
un « modèle » étant une représentation tridimensionnelle numérique constituée d'un ensemble de voxels ;
6) prise, sur le premier modèle déformé, d'une ou plusieurs mesures de dimension.

2. Procédé selon la revendication 1, dans lequel, à l'étape 1), on génère le modèle initial au moyen d'un scanner.

3. Procédé selon l'une quelconque des revendications précédentes, dans lequel, à l'étape 3), les modèles de dent (12) sont alignés selon la courbe de support initiale (14i).

4. Procédé selon l'une quelconque des revendications précédentes, dans lequel,
- à l'étape 6),
- le premier modèle déformé est présenté à un opérateur, et/ou
- on modifie la forme et/ou la position d'un ou plusieurs modèles de dent (12) du premier modèle déformé et/ou
- à l'étape 2), on découpe le modèle initial (10) de manière à définir un modèle d'arcade supérieure et un modèle d'arcade inférieure, et, à l'étape 6), on modifie la position du modèle d'arcade supérieure par rapport au modèle d'arcade inférieure.

5. Procédé selon l'une quelconque des revendications précédentes, comportant une étape 7), postérieure à l'étape 6), dans laquelle
A) on modifie le premier modèle déformé par déformation de la courbe de support déformée jusqu'à obtenir une courbe de support finale, de manière à obtenir un deuxième modèle déformé.

6. Procédé selon la revendication 5, dans lequel, à l'étape A) on modifie le premier modèle déformé par déformation de la courbe de support déformée (14d) jusqu'à obtenir une courbe de support finale identique à la courbe de support initiale.

7. Procédé selon l'une quelconque des revendications 5 et 6, comportant, après l'étape A), l'étape B) suivante :
B) on conçoit et on fabrique, à partir du deuxième modèle déformé, un appareil orthodontique.

8. Procédé selon l'une quelconque des revendications précédentes, dans lequel, à l'étape 5), la courbe de support initiale (14i)
- est indéformable selon une ou plusieurs directions, ou
- présente une capacité d'allongement ou de raccourcissement uniforme, ou
- présente une capacité d'allongement ou de raccourcissement limitée.

9. Procédé selon l'une quelconque des revendications précédentes, dans lequel, à l'étape 5) et/ou, lorsque la revendication 5 s'applique, à l'étape 7), la courbe de support initiale (14i) présente une longueur constante.

10. Procédé selon l'une quelconque des revendications précédentes, dans lequel les modèles de dents (12) sont configurés pour laisser libre la déformation à l'étape 5).

11. Procédé selon l'une quelconque des revendications précédentes, dans lequel la courbe de support déformée (14d) est rectiligne.

12. Procédé selon l'une quelconque des revendications précédentes, dans lequel, à l'étape 3), on détermine la courbe de support initiale (14i) en fonction de caractéristiques dimensionnelles de l'arcade.

13. Procédé selon l'une quelconque des revendications précédentes, dans lequel, à l'étape 3), la courbe de support initiale (14i) est déterminée de manière à traverser au moins deux modèles de dent, de préférence tous les modèles de dent de l'arcade dentaire.

14. Procédé selon l'une quelconque des revendications précédentes, dans lequel,
à l'étape 3), on détermine plusieurs courbes de support initiales (14i),
à l'étape 4), on fixe virtuellement lesdites courbes de support initiales aux mêmes modèles de dent, à des modèles de dent différents, ou partiellement aux mêmes modèles de dent et partiellement à des modèles de dent différents, et
à l'étape 5), on déforme les courbes de support initiales sans modifier leurs longueurs respectives.

15. Procédé selon l'une quelconque des revendications précédentes,
dans lequel, avant l'étape 5), on colore, au moins partiellement, le modèle initial (10) en utilisant un scanner couleur à l'étape 1) ou
comportant, avant l'étape 5), les étapes supplémentaires successives suivantes :
a) identification d'une vue du modèle initial présentant une concordance maximale avec une photo de l'arcade ;
b) identification pour un voxel, de préférence pour chaque voxel, représenté sur ladite vue, d'un pixel de ladite photo qui représente le même point de l'arcade dentaire que le voxel ;
c) affectation au dit voxel des couleurs dudit pixel,
de manière à colorer, au moins partiellement, le modèle initial.

16. Procédé selon l'une quelconque des revendications 1 à 14, comportant, avant l'étape 5), les étapes supplémentaires successives suivantes :
a) identification d'une vue du modèle initial (10) présentant une concordance maximale avec une vue hyperréaliste de l'arcade obtenue au moyen d'un réseau de neurones;
b) identification pour un voxel, de préférence pour chaque voxel, représenté sur ladite vue, d'un pixel de ladite photo qui représente le même point de l'arcade dentaire que le voxel ;
c) affectation au dit voxel des couleurs dudit pixel,
de manière à colorer, au moins partiellement, le modèle initial.

17. Procédé selon la revendication immédiatement précédente, dans lequel ladite vue hyperréaliste est obtenue suivante les étapes successives suivantes :
a') création d'une base d'apprentissage constituée de plus de 1 000 enregistrements, chaque enregistrement comportant :
- une photo représentant une arcade dentaire « historique », et
- une vue « historique » d'un modèle tridimensionnel numérique modélisant ladite arcade dentaire historique, la vue « historique » représentant l'arcade dentaire historique comme la photo ;
b') entraînement d'un réseau de neurones au moyen de la base d'apprentissage, afin qu'il apprenne à colorer, de manière hyperréaliste, une vue d'un modèle ;
c') soumission de ladite vue du modèle initial au réseau de neurones entrainé, de manière qu'il la colore de manière hyperréaliste.

18. Procédé selon l'une quelconque des revendications 15 à 17, dans lequel, à l' étape 6), on prend, sur le premier modèle déformé, une ou plusieurs mesures de couleur.

19. Utilisation d'un procédé selon l'une quelconque des revendications précédentes, pour concevoir et fabriquer un appareil orthodontique.

## Patentansprüche

1. Verfahren zur Einschätzung einer Zahnsituation eines Patienten, wobei das Verfahren die folgenden aufeinander folgenden Schritte umfasst, die mittels eines Computers ausgeführt werden:
1) Erzeugen eines anfänglichen Modells (10) mindestens eines Zahnbogens des Patienten;
2) Zerlegen des anfänglichen Modells, um ein Zahnmodell (12) für jeden von mindestens einem Teil der in dem anfänglichen Modell dargestellten Zähne zu definieren und so ein zerlegtes Modell zu erhalten;
3) Definieren einer anfänglichen Stützkurve (14i) in dem zerlegten Modell;
4) virtuelles Fixieren jedes Zahnmodells an der anfänglichen Stützkurve, so dass sich die Position und die Ausrichtung des Zahnmodells ändern, je mehr die anfängliche Stützkurve verformt wird;
5) Ändern des zerlegten Modells durch Verformen der anfänglichen Stützkurve, bis eine verformte Stützkurve (14d) erhalten wird, so dass ein verformtes erstes Modell erhalten wird,
wobei ein "Modell" eine digitale dreidimensionale Darstellung ist, die aus einer Menge von Voxeln besteht;
6) Vornehmen, an dem verformten ersten Modell, einer oder mehrerer Dimensionsmessungen.

2. Verfahren nach Anspruch 1, bei dem man im Schritt 1) das anfängliche Modell mittels eines Scanners erzeugt.

3. Verfahren nach einem der vorhergehenden Ansprüche, bei dem im Schritt 3) die Zahnmodelle (12) entlang der anfänglichen Stützkurve (14i) ausgerichtet werden.

4. Verfahren nach einem der vorhergehenden Ansprüche, bei dem
- im Schritt 6)
- das verformte erste Modell einer Bedienperson angezeigt wird und/oder
- man die Form und/oder die Position eines oder mehrerer Zahnmodelle (12) des verformten ersten Modells ändert und/oder
- man im Schritt 2) das anfängliche Modell (10) so zerlegt, dass ein Oberbogenmodell und ein Unterbogenmodell definiert werden, und man im Schritt 6) die Position des Oberbogenmodells in Bezug auf das Unterbogenmodell ändert.

5. Verfahren nach einem der vorhergehenden Ansprüche, umfassend nach dem Schritt 6) einen Schritt 7), bei dem A) man das verformte erste Modell durch Verformen der verformten Stützkurve ändert, bis eine finale Stützkurve erhalten wird, so dass ein verformtes zweites Modell erhalten wird.

6. Verfahren nach Anspruch 5, bei dem man im Schritt A) das verformte erste Modell durch Verformen der verformten Stützkurve (14d) ändert, bis eine finale Stützkurve erhalten wird, die identisch mit der anfänglichen Stützkurve ist.

7. Verfahren nach einem der Ansprüche 5 und 6, umfassend nach dem Schritt A) den folgenden Schritt B):
B) man entwirft und fertigt, ausgehend von dem verformten zweiten Modell, ein orthodontisches Gerät.

8. Verfahren nach einem der vorhergehenden Ansprüche, bei dem im Schritt 5) die anfängliche Stützkurve (14i)
- entlang einer oder mehrerer Richtungen unverformbar ist oder
- eine einheitliche Längungs- oder Kürzungskapazität aufweist oder
- eine eingeschränkte Längungs- oder Kürzungskapazität aufweist.

9. Verfahren nach einem der vorhergehenden Ansprüche, bei dem im Schritt 5) und oder, wenn Anspruch 5 gilt, im Schritt 7) die anfängliche Stützkurve (14i) eine konstante Länge aufweist.

10. Verfahren nach einem der vorhergehenden Ansprüche, bei dem die Zahnmodelle (12) dazu ausgestaltet sind, die Verformung im Schritt 5) frei zuzulassen.

11. Verfahren nach einem der vorhergehenden Ansprüche, bei dem die verformte Stützkurve (14d) geradlinig ist.

12. Verfahren nach einem der vorhergehenden Ansprüche, bei dem man im Schritt 3) die anfängliche Stützkurve (14i) in Abhängigkeit von maßlichen Merkmalen des Bogens bestimmt.

13. Verfahren nach einem der vorhergehenden Ansprüche, bei dem im Schritt 3) die anfängliche Stützkurve (14i) so bestimmt wird, dass sie mindestens zwei Zahnmodelle, bevorzugt alle Zahnmodelle, des Zahnbogens durchläuft.

14. Verfahren nach einem der vorhergehenden Ansprüche, bei dem
man im Schritt 3) mehrere anfängliche Stützkurven (14i) bestimmt,
man im Schritt 4) die anfänglichen Stützkurven virtuell an denselben Zahnmodellen, an verschiedenen Zahnmodellen oder teilweise an denselben Zahnmodellen und teilweise an verschiedenen Zahnmodellen fixiert und
man im Schritt 5) die anfänglichen Stützkurven verformt, ohne ihre jeweiligen Längen zu ändern.

15. Verfahren nach einem der vorhergehenden Ansprüche, bei dem man vor dem Schritt 5) das anfängliche Modell (10) zumindest teilweise einfärbt, indem im Schritt 1) ein Farbscanner verwendet wird, oder
das vor dem Schritt 5) die folgenden aufeinander folgenden zusätzlichen Schritte umfasst:
a) Identifizieren einer Ansicht des anfänglichen Modells, die eine maximale Übereinstimmung mit einem Foto des Bogens aufweist;
b) Identifizieren, für ein Voxel, bevorzugt für jedes Voxel, das in der Ansicht dargestellt ist, eines Pixels des Fotos, das denselben Punkt des Zahnbogens wie das Voxel darstellt;
c) Zuweisen der Farben des Pixels zu dem Voxel,
so dass das anfängliche Modell zumindest teilweise eingefärbt wird.

16. Verfahren nach einem der Ansprüche 1 bis 14, das vor dem Schritt 5) die folgenden aufeinander folgenden zusätzlichen Schritte umfasst:
a) Identifizieren einer Ansicht des anfänglichen Modells (10), die eine maximale Übereinstimmung mit einer hyperrealistischen Ansicht des Zahnbogens aufweist, die mittels eines neuronalen Netzes erhalten wird;
b) Identifizieren, für ein Voxel, bevorzugt für jedes Voxel, das in der Ansicht dargestellt ist, eines Pixels des Fotos, das denselben Punkt des Zahnbogens wie das Voxel darstellt;
c) Zuweisen der Farben des Pixels zu dem Voxel,
so dass das anfängliche Modell zumindest teilweise eingefärbt wird.

17. Verfahren nach dem unmittelbar vorhergehenden Anspruch, bei dem die hyperrealistische Ansicht nach den folgenden aufeinander folgenden Schritten erhalten wird:
a') Erstellen einer Lerndatenbank, die aus mehr als 1.000 Datensätzen besteht, wobei jeder Datensatz umfasst:
- ein Foto, das einen "historischen" Zahnbogen darstellt, und
- eine "historische" Ansicht eines digitalen dreidimensionalen Modells, das den historischen Zahnbogen modelliert, wobei die "historische" Ansicht den historischen Zahnbogen wie das Foto darstellt;
b') Trainieren eines neuronalen Netzes mittels der Lerndatenbank, damit es lernt, eine Ansicht eines Modells hyperrealistisch einzufärben;
c') Unterziehen der Ansicht des anfänglichen Modells dem trainierten neuronalen Netz, so dass dieses es hyperrealistisch einfärbt.

18. Verfahren nach einem der Ansprüche 15 bis 17, bei dem man im Schritt 6) an dem verformten ersten Modell eine oder mehrere Farbmessungen vornimmt.

19. Verwendung eines Verfahren nach einem der vorhergehenden Ansprüche zum Entwerfen und Fertigen eines orthodontischen Geräts.

## Claims

1. Method for evaluating a dental situation of a patient, said method having the following successive steps, implemented by a computer:
1) generating an initial model (10) of at least one dental arch of the patient;
2) splitting the initial model in order to define a tooth model (12) for each of at least some of the teeth represented on the initial model and thereby to obtain a split model;
3) defining an initial support curve (14i) in the split model;
4) fixing each tooth model virtually to the initial support curve, in such a way that the position and the orientation of said tooth model modify as the initial support curve is deformed;
5) modifying the split model by deformation of the initial support curve until a deformed support curve (14d) is obtained, so as to obtain a first deformed model, a "model" being a three-dimensional digital representation composed of a set of voxels;
6) taking one or more measurements of size on the first deformed model.

2. Method according to Claim 1, in which, in step 1), the initial model is generated by means of a scanner.

3. Method according to either of the preceding claims, in which, in step 3), the tooth models (12) are aligned according to the initial support curve (14i).

4. Method according to any one of the preceding claims, in which,
- in step 6),
- the first deformed model is presented to an operator, and/or
- the shape and/or the position of one or more tooth models (12) of the first deformed model are modified, and/or
- in step 2), the initial model (10) is split in such a way as to define an upper arch model and a lower arch model, and, in step 6), the position of the upper arch model with respect to the lower arch model is modified.

5. Method according to any one of the preceding claims, having a step 7), subsequent to step 6), in which
A) the first deformed model is modified by deformation of the deformed support curve until a final support curve is obtained, so as to obtain a second deformed model.

6. Method according to Claim 5, in which, in step A), the first deformed model is modified by deformation of the deformed support curve (14d) until a final support curve is obtained that is identical to the initial support curve.

7. Method according to either of Claims 5 and 6, comprising, after step A), the following step B):
B) an orthodontic appliance is designed and manufactured on the basis of the second deformed model.

8. Method according to any one of the preceding claims, in which, in step 5), the initial support curve (14i)
- is non-deformable in one or more directions, or
- has a uniform lengthening or shortening capacity, or
- has a limited lengthening or shortening capacity.

9. Method according to any one of the preceding claims, in which, in step 5) and/or, when claim 5 applies, in step 7), the initial support curve (14i) has a constant length.

10. Method according to any one of the preceding claims, in which the tooth models (12) are configured to freely permit the deformation in step 5).

11. Method according to any one of the preceding claims, in which the deformed support curve (14d) is rectilinear.

12. Method according to any one of the preceding claims, in which, in step 3), the initial support curve (14i) is determined as a function of dimensional characteristics of the arch.

13. Method according to any one of the preceding claims, in which, in step 3), the initial support curve (14i) is determined in such a way as to cross at least two tooth models, preferably all the tooth models of the dental arch.

14. Method according to any one of the preceding claims, in which,
in step 3), several initial support curves (14i) are determined,
in step 4), said initial support curves are fixed virtually to the same tooth models, to different tooth models, or in part to the same tooth models and in part to different tooth models, and,
in step 5), the initial support curves are deformed without modifying their respective lengths.

15. Method according to any one of the preceding claims, in which, before step 5), the initial model (10) is coloured, at least partially, using a colour scanner in step 1), or
having, before step 5), the following successive supplementary steps:
a) identification of a view of the initial model having a maximum concordance with a photo of the arch;
b) identification for a voxel, preferably for each voxel, represented on said view, of a pixel of said photo that represents the same point of the dental arch as the voxel;
c) allocation to said voxel of the colours of said pixel,
in such a way as to colour, at least partially, the initial model.

16. Method according to any one of Claims 1 to 14, comprising, before step 5), the following successive supplementary steps:
a) identification of a view of the initial model (10) having a maximum concordance with a hyper-realistic view of the arch obtained by means of a neural network;
b) identification for a voxel, preferably for each voxel, represented on said view, of a pixel of said photo that represents the same point of the dental arch as the voxel;
c) allocation to said voxel of the colours of said pixel,
in such a way as to colour, at least partially, the initial model.

17. Method according to the immediately preceding claim, in which said hyper-realistic view is obtained by the following successive steps:
a') creation of a learning base composed of over 1,000 records, each record having:
- a photo representing a "historical" dental arch, and
- a "historical" view of a three-dimensional digital model of said historical dental arch, the "historical" view representing the historical dental arch as the photo;
b') training a neural network by means of the learning base, such that it learns to colour, in a hyper-realistic manner, a view of a model;
c') submission of said view of the initial model to the trained neural network, such that the latter colours it in a hyper-realistic manner.

18. Method according to any one of Claims 15 to 17, in which, in step 6), one or more measurements of colour are taken on the first deformed model.

19. Use of a method according to any one of the preceding claims, for designing and manufacturing an orthodontic appliance.
